# EUROPEAN PATENT APPLICATION

(11) **EP 3 401 723 A1**
(43) Date of publication of application: **14.11.2018**
(21) Application number: 16879028.5
(22) Date of filing: 22.12.2016
(51) Int. Cl.: G02C 7/00, G02B 1/11, G02B 1/14, G06Q 30/06

(54) **OPTICAL MEMBER, OPTICAL MEMBER MANAGEMENT SYSTEM, AND METHOD FOR MANUFACTURING OPTICAL MEMBER**

(30) Priority: 22.12.2015 JP 2015250687; 22.12.2015 JP 2015250688; 22.12.2015 JP 2015250690; 22.12.2015 JP 2015250691; 22.12.2015 JP 2015250692; 22.12.2015 JP 2015250693
(71) Applicant: Hoya Lens Thailand Ltd., Pathumthani 12130 (TH)
(72) Inventor: OOKUBO, Shigeki, Tokyo 161-8525 (JP); ANNAKA, Satoshi, Tokyo 161-8525 (JP); KAWADA, Masayoshi, Tokyo 161-8525 (JP); YAMANOUCHI, Kazuhito, Tokyo 161-8525 (JP); NAITO, Shuji, Tokyo 161-8525 (JP)
(74) Representative: Hoffmann Eitle
(86) International application number: PCT/JP2016/088587
(87) International publication number: WO 2017/111142

(57) **Abstract**

Provided is a spectacle lens or the like having a stealth mark that is invisible under visible light and is visible under light of a predetermined wavelength.

A spectacle lens includes a stealth mark that is invisible under the visible light and visible under the predetermined wavelength, and the stealth mark includes an impregnated region formed from a fluorescent coloring material and formed on the spectacle lens.

## Description

### Technical field

The present disclosure relates to an optical component, an optical component management system, and an optical component production method, and relates to, for example, a spectacle lens management system, a spectacle lens management method, a program, a spectacle lens production system, a spectacle lens production method, and a spectacle lens.

### Background Art

A spectacle lens is required to have high transparency by necessity, and there is a certain limitation in proving printing on a surface thereof. Therefore, it is necessary to attach a specific identification code or the like to a packaging material or the like of a spectacle lens in order to manage information on the spectacle lens in producing and selling a spectacle lens.

Patent Literature 1 discloses a spectacle lens that is a spectacle lens having a surface to which information is attached, and the spectacle lens is characterized in that desired information remains on a surface of a spectacle lens even after lens shaping work is applied to the spectacle lens.

### Citation List

### Patent Literature

Patent Literature 1: JP 2000-284234 A

### Summary of Invention

The present disclosure relates to [1] to [3] below.
[1] An optical component management system including:
   a stealth mark input unit that reads and inputs identification information from a stealth mark that is invisible under visible light and visible under a predetermined wavelength;
   a storage unit that stores management information on an optical component; and
   a data processing unit that receives the identification information from the stealth mark input unit and selects, from the storage unit, management information corresponding to the stealth mark,
   in which the stealth mark input unit includes a stealth mark reading unit that reads a stealth mark which is invisible under the visible light and visible under light of the predetermined wavelength and includes an impregnated region formed from a fluorescent coloring material and formed on an optical component.
[2] An optical component production system including:
   a stealth mark input unit that reads and inputs a stealth mark which is attached to an optical component and is invisible under visible light and visible under a predetermined wavelength; and
   a processing unit that processes an optical component on the basis of the stealth mark input to the stealth mark input unit,
   in which the stealth mark input unit includes a stealth mark reading unit which reads a stealth mark which is invisible under the visible light and visible under light of the predetermined wavelength and includes an impregnated region from a fluorescent coloring material and formed on an optical component.
[3] An optical component including a stealth mark that is invisible under visible light and visible under a predetermined wavelength,
   in which the stealth mark includes an impregnated region formed from a fluorescent coloring material and formed on an optical component.

### Brief Description of Drawings

Fig. 1 is a functional block diagram illustrating a configuration of a spectacle lens management system 1 according to an embodiment of the present disclosure.
Fig. 2 is a cross-sectional view illustrating a schematic structure of a spectacle lens 500 used in the present disclosure.
Fig. 3 is a block diagram illustrating a hardware configuration of a computer constituting a terminal device or a management device according to the embodiment of the present disclosure.
Fig. 4 is a flowchart illustrating exemplary operation of the spectacle lens management system 1 according to the embodiment of the present disclosure.
Fig. 5 is a functional block diagram illustrating a configuration of a spectacle lens management system 1 according to a second embodiment.
Fig. 6 is a table illustrating access permission levels in respective policies in the spectacle lens management system 1 according to the embodiment of the present disclosure.
Fig. 7 is a functional block diagram illustrating a configuration of a terminal device 100c.
Fig. 8 is a flowchart illustrating exemplary operation of the spectacle lens management system 1 according to the embodiment of the present disclosure.
Fig. 9 is a flowchart illustrating exemplary operation of the spectacle lens management system 1 according to the embodiment of the present disclosure.
Fig. 10 is a flowchart illustrating exemplary operation of the spectacle lens management system 1 according to the embodiment of the present disclosure.
Fig. 11 is a flowchart illustrating exemplary operation of the spectacle lens management system 1 according to the embodiment of the present disclosure.
Fig. 12 is a functional block diagram illustrating a configuration of a spectacle lens production system 2 according to a third embodiment.
Fig. 13 is a functional block diagram illustrating a configuration of a spectacle lens production system 2 according to a fourth embodiment.
Fig. 14 is a functional block diagram illustrating a configuration of a spectacle lens production system 2 according to a fifth embodiment.
Fig. 15 is a schematic diagram illustrating a structure of a spectacle lens of a first embodiment.
Fig. 16 is a cross-sectional view to describe a structure of a spectacle lens 500 according to a second embodiment.
Fig. 17 is a schematic diagram illustrating a structure of a spectacle lens according to the third embodiment.
Fig. 18 is a schematic diagram illustrating a structure of a spectacle lens according to the fourth embodiment.
Fig. 19 is a schematic diagram illustrating a use mode of the spectacle lens according to the present disclosure.

### Description of Embodiments

According to a management method in the related art, management is performed by attaching identification information of an optical component such as a spectacle lens to a packaging material or the like, however; there may be problem that: management information is not constantly correct in a case where an packaging material is separated from an optical component because combination between an optical component and a packaging material is mixed up by mistake; and it is impossible to trace information on an optical component after the optical component is delivered to an end user.

Additionally, since a mark indicating a design reference point is provided in a manner not visually recognizable by a consumer after an optical component such as a spectacle lens is distributed to the consumer, there may be a problem that a skillful technique is required to confirm the position of the design reference point.

According to a method disclosed in Patent Literature 1, in a case where printing is provided simply by an inkjet printer, a code attached to an optical component such as a spectacle lens can be visually recognized even under visible light, and there is a limit in use as a spectacle lens.

An embodiment of the present disclosure is directed to providing an optical component management system, an optical component management method, and a program adapted to manage information on an optical component such as a spectacle lens.

The present disclosure relates to [1-1] to [1-4] below.
[1-1] An optical component management system including:
   a stealth mark input unit that reads and inputs identification information from a stealth mark that is invisible under visible light and visible under a predetermined wavelength;
   a storage unit that stores management information on an optical component; and
   a data processing unit that receives the identification information from the stealth mark input unit and selects, from the storage unit, management information corresponding to the stealth mark,
   in which the stealth mark input unit includes a stealth mark reading unit that reads a stealth mark which is invisible under the visible light and visible under light of the predetermined wavelength and includes an impregnated region formed from a fluorescent coloring material and formed on an optical component.
[1-2] An optical component management method, including the steps of:
   reading a stealth mark which is invisible under visible light and visible under light of a predetermined wavelength and includes an impregnated region formed from a fluorescent coloring material and formed on an optical component;
   reading and inputting identification information from the stealth mark that is invisible under the visible light and visible under the predetermined wavelength; and
   receiving the identification information read in the stealth mark inputting step, and selecting management information corresponding to the stealth mark from the storage unit that stores management information on an optical component.
[1-3] A program causing a terminal device included in the optical component management system recited in above-described [1] to function as a stealth mark input unit that reads and inputs identification information from a stealth mark that is invisible under visible light and visible under a predetermined wavelength, and also function as a stealth mark reading unit that reads a stealth mark which is invisible under the visible light and visible under light of the predetermined wavelength and includes an impregnated region formed from a fluorescent coloring material and formed on an optical component.
[1-4] A program causing a management device included in the optical component management system recited in above-described [1] to function as a storage unit that stores management information on an optical component and also function as a data processing unit that receives identification information from the stealth mark input unit and selects management information corresponding to the stealth mark from the storage unit.

According to an embodiment described above, it is possible to provide an optical component management system, an optical component management method, and a program adapted to manage information on an optical component.

An embodiment of the present disclosure is directed to providing an optical component production system, an optical component production method, and a program adapted to perform processing on the basis of information attached to an optical component such as a spectacle lens.

The present disclosure relates to [2-1] to [2-2] below.
[2-1] An optical component production system including:
   a stealth mark input unit that reads and inputs a stealth mark which is attached to an optical component before lens shaping work and is invisible under visible light and visible under a predetermined wavelength; and
   a processing unit that processes the optical component before the lens shaping work on the basis of the stealth mark input to the stealth mark input unit,
   in which the stealth mark input unit includes a stealth mark reading unit that reads a stealth mark which is invisible under the visible light and visible under light of the predetermined wavelength and includes an impregnated region formed from a fluorescent coloring material and formed on an optical component.
[2-2] An optical component production method including the steps of:
   reading a stealth mark which is invisible under visible light and visible under light of a predetermined wavelength and includes an impregnated region formed from a fluorescent coloring material and formed on an optical component;
   reading and inputting a stealth mark which is attached to an optical component before lens shaping work and is invisible under the visible light and visible under the predetermined wavelength; and
   processing the optical component before lens shaping work on the basis of the stealth mark input to a stealth mark input unit.

According to an embodiment described above, it is possible to provide an optical component production system, an optical component production method, and a program adapted to perform processing on the basis of information attached to an optical component.

An embodiment of the present disclosure is directed to providing an optical component having a stealth mark that is invisible under visible light and visible under light of a predetermined wavelength.

The present disclosure relates to [3] below.
[3] An optical component including a stealth mark that is invisible under visible light and visible under a predetermined wavelength,
   in which the stealth mark includes an impregnated region formed from a fluorescent coloring material and formed on an optical component.

According to an embodiment described above, it is possible to provide an optical component having a stealth mark that is invisible under the visible light and visible under light of the predetermined wavelength.

In the following, preferred embodiments of the present disclosure will be described in detail with reference to the drawings. Note that, in the drawings, a portion same or equivalent is denoted by a same reference sign, and a description thereof will not be repeated.

Note that an optical component represents a spectacle lens and other optical components in the present specification. Examples of the optical component include substrates for recording media used in a spectacle lens, a contact lens, a camera lens, a prism, an optical fiber, an optical disk, a magnetic disk, and the like.

### First Embodiment

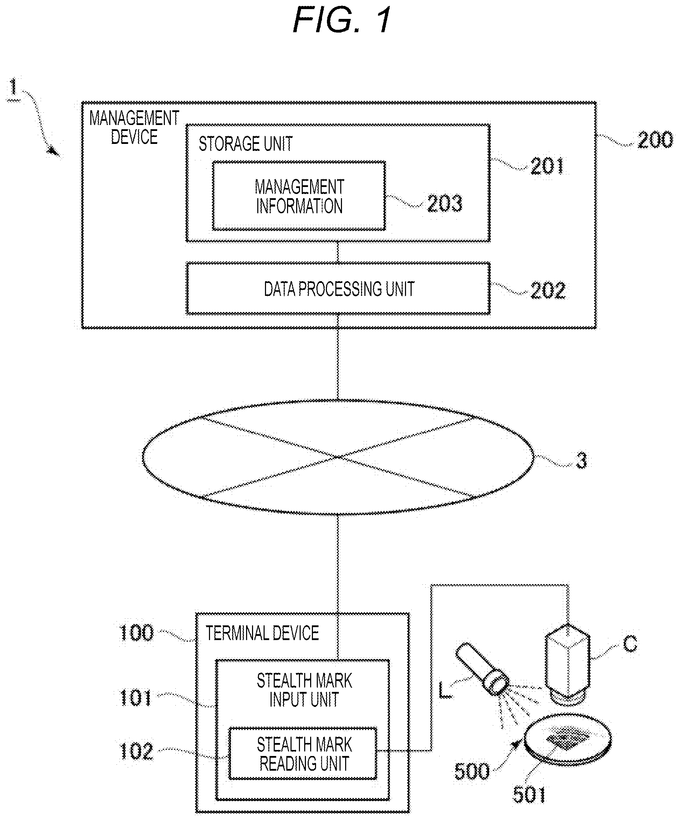

Fig. 1 is a functional block diagram illustrating a configuration of a spectacle lens management system 1 according to an embodiment of the present disclosure.

The spectacle lens management system 1 according to the embodiment of the present disclosure includes a terminal device 100 and a management device 200.

The terminal device 100 includes a stealth mark input unit 101 that reads and inputs identification information from a stealth mark 501 that is invisible under visible light and visible under a predetermined wavelength.

The stealth mark input unit 101 includes a stealth mark reading unit 102 that reads the stealth mark 501, and this stealth mark is invisible under the visible light and visible under light of the predetermined wavelength and includes an impregnated region formed from a fluorescent coloring material and formed on a spectacle lens 500. For example, the stealth mark reading unit 102 is connected to a camera C, for example, and reads the stealth mark 501 that becomes visible when the spectacle lens 500 is irradiated with light of the predetermined wavelength by a light L.

The stealth mark reading unit may be connected to a code reader that includes; a light emitting unit to emit the light of the predetermined wavelength; and a camera. An example of the light emitting unit includes a light source to emit ultraviolet light.

The management device 200 includes a storage unit 201 that stores management information I on the spectacle lens 500, and a data processing unit 202 that receives identification information from the stealth mark input unit 101 and selects, from the storage unit 201, management information i corresponding to the stealth mark 501. Examples of the management information I include production information, sales information, customer clinical record information.

Examples of the production information include a lens material, a design type, production history information, a producing factory, a production date, prescription information, quality information, surface treatment information, layout information, R/L identification information, and design reference point information.

Examples of the sales information include distribution route information, a sales contact, and a delivery date.

Examples of the customer clinical record information include a name, a date of birth, optometry information, a spectacle lens prescription, and a date of sales.

The management information i is at least a part of the management information I.

In the present embodiment, the terminal device 100 and the management device 200 are connected to each other via a network 3.

Additionally, while one terminal device 100 or one management device 200 is illustrated in the present embodiment, the number thereof is not limited thereto. A plurality of terminal devices 100 and a plurality of management devices 200 can be provided.

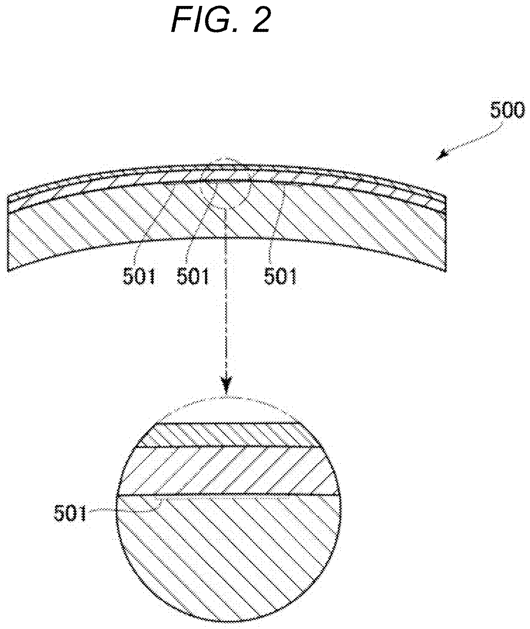

Fig. 2 is a cross-sectional view illustrating a schematic structure of the spectacle lens 500 used in the present disclosure.

The spectacle lens 500 has the stealth mark 501. The stealth mark 501 is invisible under the visible light and visible under the light of the predetermined wavelength. The stealth mark 501 includes an impregnated region formed from a fluorescent coloring material.

The term "impregnated region" represents a region impregnated with a fluorescent coloring material.

The wording "under the visible light" means under the light of sunlight, a fluorescent light, an indoor light such as a LED light, or the like.

While the predetermined wavelength is not particularly limited, but preferably be the invisible light region such as an ultraviolet region having a wavelength region 280 to 400 nm, and an infrared region having a wavelength region 0.7 to 2.5 µm.

In the present specification, the term "stealth mark" represents a mark invisible under the visible light and visible under the predetermined wavelength.

In the present specification, the wording "invisible" means a state in which it is completely invisible or hardly visible with human eyes.

As far as identification information can be provided, the stealth mark 501 is not particularly limited, and a one-dimensional code, a two-dimensional code, an alphabet, a numeral, and the like are exemplified.

As the one-dimensional code, a bar code or the like are exemplified. As the bar code, CODE 39, JAN, NW-7, and the like are exemplified.

As the two-dimensional code, PDF417, SuperCode, DataMatrix, MaxiCode, QRCode, and the like are exemplified.

Additionally, as the stealth mark, it is preferable to include a design reference point.

Examples of the fluorescent coloring material that forms a stealth mark will be stated below.

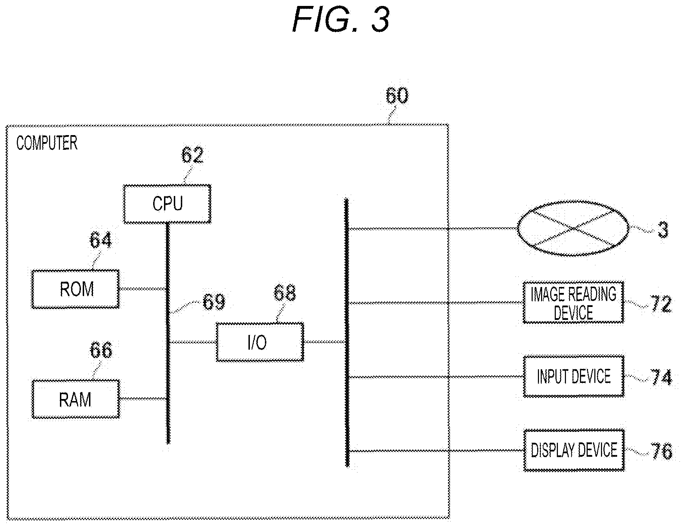

Fig. 3 is a block diagram illustrating a hardware configuration of a computer constituting the terminal device or the management device according to the embodiment of the present disclosure.

As illustrated in Fig. 3, the terminal device 100 or the management device 200 includes, for example, a CPU 62, a ROM 64 (e.g., hard disk), a RAM 66 (e.g., memory), and an I/O 68, and these elements are connected via a bus 69.

The terminal device 100 can be implemented by a server computer or a personal computer connected to an image reading device 72 like a CCD camera, an input device 74 like a keyboard and a mouse, a display device 76 like a display, and an output device (not illustrated) like a printer, or can be implemented a computer 60 equivalent thereto.

The management device 200 can be implemented by a server computer or a personal computer connected to an input device 74 like a keyboard and a mouse, a display device 76 like a display, and an output device (not illustrated) like a printer, or can be implemented a computer 60 equivalent thereto.

Then, the CPU 62 reads a program stored in the ROM 64 into the memory and executes the program, thereby achieving implementation of respective functions of the respective units in the terminal device 100 or the management device 200.

Note that, in each of the drawings, a configuration of a portion irrelevant to the essence of the present disclosure is omitted and not illustrated.

Furthermore, the terminal device 100 or the management device 200 in Fig. 1 is implemented by arbitrary combination of arbitrary hardware of the computer 60 (Fig. 3) and software, and the computer 60 includes the CPU 62, memory (RAM 66), a program loaded onto the memory, the memory unit (ROM 64) like a hard disk to store the program, and the interface (I/O 68) for network connection in Fig. 3. Additionally, note that those skilled in the art understand that the implementation method and the device include various modified examples. Each of functional block diagrams including other embodiments described below illustrates not a configuration per hardware but a block per logical function.

In the terminal device 100 or the management device 200 according to the embodiment of the present disclosure, the CPU 62 executes various kinds of processing operation corresponding to a computer program 70, thereby implementing the above-described respective units serving as various functions.

A first computer program according to the embodiment of the present disclosure is described such that the computer 60 provided to implement the terminal device 100 is caused to execute procedures to: read a stealth mark which is invisible under visible light and visible under light of a predetermined wavelength and includes an impregnated region formed a fluorescent coloring material and formed on a spectacle lens; and read and input identification information from the stealth mark that is invisible under the visible light and visible under the predetermined wavelength.

Furthermore, a second computer program according to the embodiment of the present disclosure is described such that the computer 60 provided to implement the management device 200 is caused to execute procedures to: store management information I on a spectacle lens; receive the identification information from the stealth mark input unit of the terminal device 100; and select management information i corresponding to the stealth mark from the storage unit 201.

The respective computer programs of the present embodiment may be recorded on a recording medium readable by the computer 60 that implements the terminal device 100 or the management device 200. The recording medium is not particularly limited, and recording media having various forms are conceivable. Additionally, the program may be loaded from a recording medium into the memory of the computer 60, or may be downloaded to the computer via the network and loaded onto the memory.

A management method by the spectacle lens management system 1 of the present embodiment in the above-described configuration will be described below.

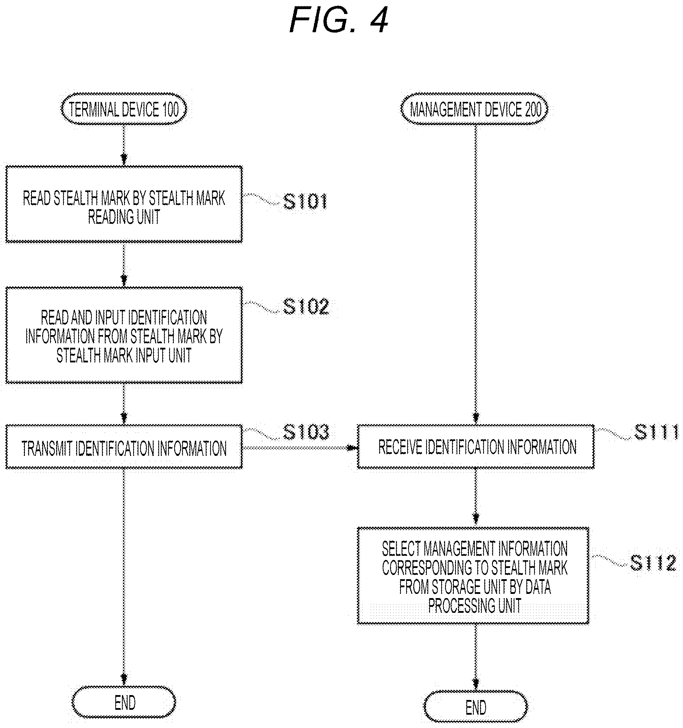

Fig. 4 is a flowchart illustrating exemplary operation of the spectacle lens management system 1 according to the embodiment of the present disclosure.

In a spectacle lens management method according to the present embodiment, the stealth mark reading unit 102 of the terminal device 100 reads a stealth mark 501 that is invisible under visible light and visible under light of a predetermined wavelength and includes an impregnated region formed from a fluorescent coloring material and formed on a spectacle lens (step S101), the stealth mark input unit 101 reads and inputs identification information from the stealth mark 501 that is invisible under the visible light and visible under the predetermined wavelength (step S102), the terminal device 100 transmits the identification information (step S103), the data processing unit 202 of the management device 200 receives the identification information from the stealth mark input unit 101 (step S111), and the data processing unit 202 selects, from the storage unit 201, management information i corresponding to the stealth mark 501 (step S112).

As described above, the spectacle lens management system 1 according to the present embodiment can manage information on a spectacle lens by reading a stealth mark formed on the spectacle lens. Since the stealth mark includes an impregnated region formed from a fluorescent coloring material, the stealth mark cannot be visually recognized under the visible light and can be confirmed only when irradiated with the predetermined wavelength. Therefore, there is no problem in usual use as a spectacle lens, and history information on a spectacle from production to distribution of the spectacle lens can be managed by a stealth mark. As a result, a spectacle store can utilize the spectacle lens management system of the present disclosure for customer management, customer support, and after-sales service, more specifically, can utilize the system as: a chart-less system by managing customer clinical records with electronic data; a sales promotion tool to manage spectacle lens manufacturer's product warranty, store's product warranty, issuance timing of a direct mail; assistance for reproduction of a spectacle lens, and the like.

### Second Embodiment

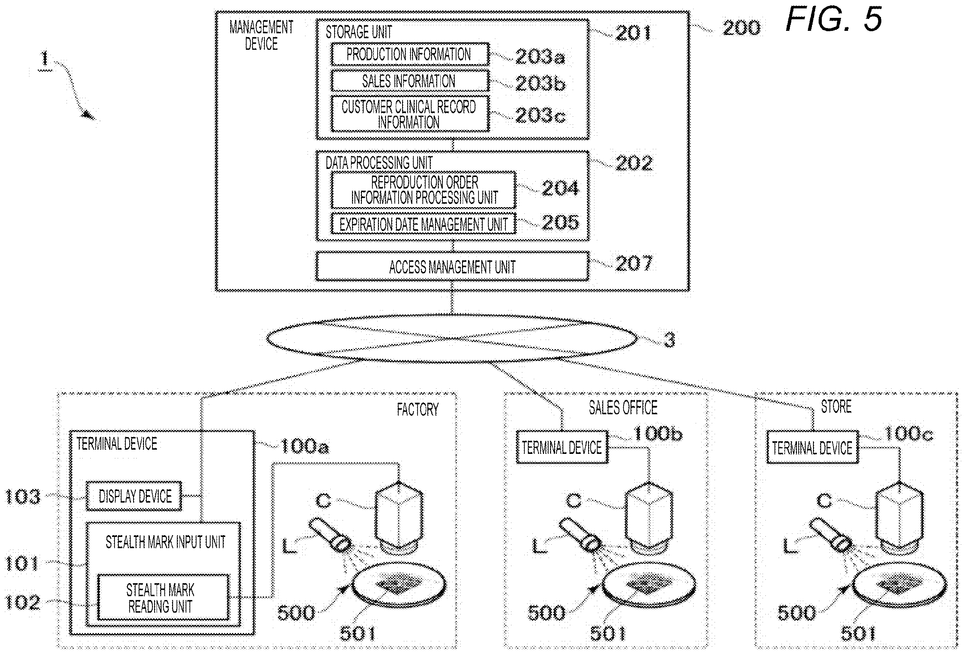

Fig. 5 is a functional block diagram illustrating a configuration of a spectacle lens management system 1 according to a second embodiment.

In the present embodiment, different from an embodiment described above, provided are: a terminal device 100a installed in a factory of a spectacle lens manufacturer; a terminal device 100b installed at a sales office of the spectacle lens manufacturer; and a terminal device 100c installed at a spectacle store (hereinafter, the terminal devices 100a to 100c are collectively referred to as "terminal device 100"). Thus, the terminal devices are installed in the factory of the spectacle lens manufacturer, the sales office of the spectacle lens manufacturer, and the spectacle stores, and information on manufacture and information on sales are aggregated, and therefore, an inquiry regarding an individual product from an end user can be quickly handled. The terminal device 100a includes a display unit 103 that displays management information i transmitted from the management device 200. Meanwhile, the terminal device 100b also includes a display unit in a manner similar to the terminal device 100a, although not illustrated.

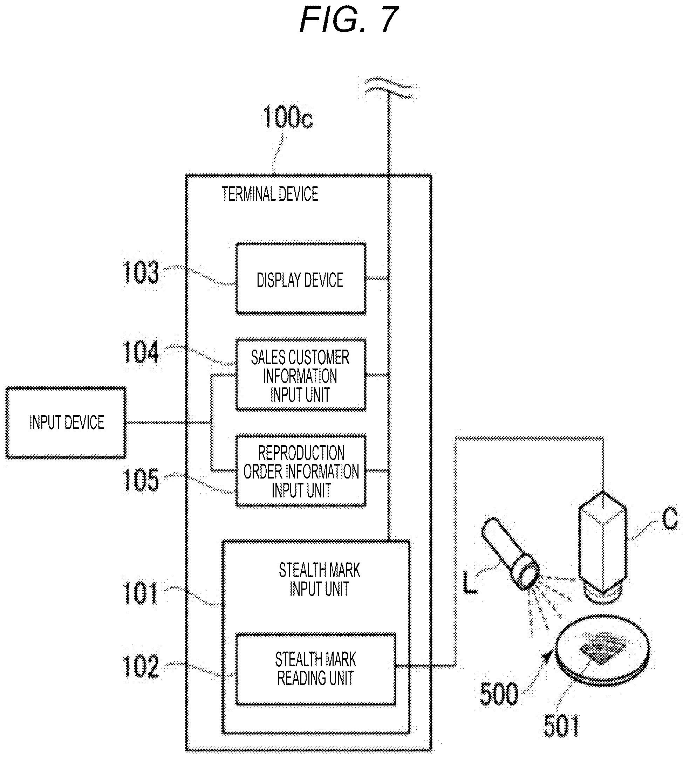

Fig. 7 is a functional block diagram illustrating a configuration of the terminal device 100c.

Different from the embodiment of a terminal device 100, the terminal device 100c further includes a sales customer information input unit 104 to input sales customer information. Examples of the sales customer information includes a name, a date of birth, optometry information, prescription information of a spectacle lens, a date of sales, and the like related to a customer. The sales customer information can be input by, for example, an input device such as a keyboard or a mouse.

Different from the embodiment of the terminal device 100, the terminal device 100c further includes a reproduction order information input unit 105 to input reproduction order information in a manner correlated to identification information of a spectacle lens.

The term "reproduction order" means producing a spectacle lens same as a spectacle lens previously produced.

The term "reproduction order information" includes identification information of a spectacle lens, number of ordered products, and the like.

Referring again to Fig. 5, the management device 200 includes, as management information I in the storage unit, production information 203a, sales information 203b, and customer clinical record information 203c.

The terminal device and the management device in the present embodiment at least have functions similar to those of the terminal device 100 and a management device 200 of the above-described embodiment. A data processing unit 202 of the management device 200 is adapted to store the sales customer information in a storage unit 201 in a manner correlated to identification information of a spectacle lens.

Examples of the sales customer information includes personal information such as a name and a date of birth, optometry information, prescription of a spectacle lens, a date of sales, and the like related to a customer.

The data processing unit 202 of the management device 200 further includes a reproduction information processing unit 204 that selects, from the storage unit 201, management information i including prescription information on the basis of identification information of a spectacle lens, and transmits the selected information to another terminal device (for example, terminal device 100a or 100b).

The data processing unit 202 of the management device 200 further includes an expiration date management unit 205 that transmits expiration date information to a terminal device 100a that maintains a spectacle lens that has passed a predetermined period from a production date of a spectacle lens stored in the storage unit 201.

Different from the above embodiment, the management device 200 has an access management unit 207 that restricts information access from each terminal device 100. Since there is a problem in information security because the information is shared among respective business entities such as a spectacle lens manufacturer and a spectacle store, the access management unit 207 is provided.

For example, a security policy is set in the management device 200 for each terminal device 100 by an administrator as security measures for information accumulated in the management device.

A security policy for each terminal device 100 is managed by the access management unit 207 of the management device 200. Each terminal device 100 in the spectacle lens management system 1 is set, by the access management unit 207 of the management device 200, to have one of policies out of a plurality of levels of policies.

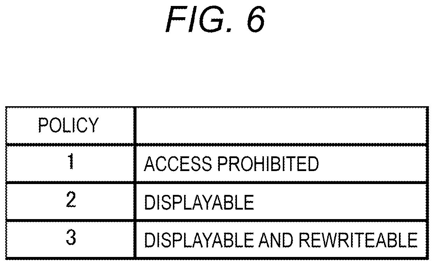

Fig. 6 is a table illustrating access permission levels in respective policies in the spectacle lens management system 1 according to the embodiment of the present disclosure. In the present embodiment, the management device 200 sets, as a base policy for the terminal device 100, a policy 1 indicating access prohibition to the storage unit 201. Furthermore, the access management unit 207 may change, in accordance with a user of the terminal device 100, the policy to one of the policies 2 to 3 which permit access to the storage unit 201.

In the present embodiment, the terminal device 100 and the management device 200 are connected to each other via a network 3.

The management device and the terminal device of the present embodiment are also implemented by arbitrary combination of hardware of a computer 60 and software in Fig. 3 described in the above embodiment. The respective functions of the respective units in the management device and the terminal device can be implemented by a CPU 62 of the computer 60 reading, into a memory (RAM 66), a program stored in a memory unit (ROM 64) such as a hard disk, and executing the program.

In the present embodiment, the terminal device 100a installed in a factory transmits the management information i to the management device 200 in a manner correlated to identification information on a stealth mark, and the data processing unit 202 of the management device 200 stores, as spectacle lens production information 203a, the management information in the storage unit 201.

Here, examples of the management information i includes a lens material, a design type, a producing factory, a production date, prescription information, spectacle lens order information, production history information, customer management information, quality information, surface treatment information, layout information, order information, R/L identification information, design reference point information, and the like.

The terminal device 100a reads the identification information from a stealth mark attached to a spectacle lens and transmits the same to the data processing unit 202 of the management device 200, and the data processing unit 202 selects, from the storage unit 201, management information i corresponding to the stealth mark and returns the selected management information i to the terminal device 100a.

The terminal device 100a displays, on the display unit 103, the management information i transmitted from the management device 200. Since information corresponding to an individual spectacle lens can be displayed by displaying the surface treatment information, layout information, and the like in a producing process as the management information i, a paper instruction attached to a spectacle lens in the factory can be eliminated.

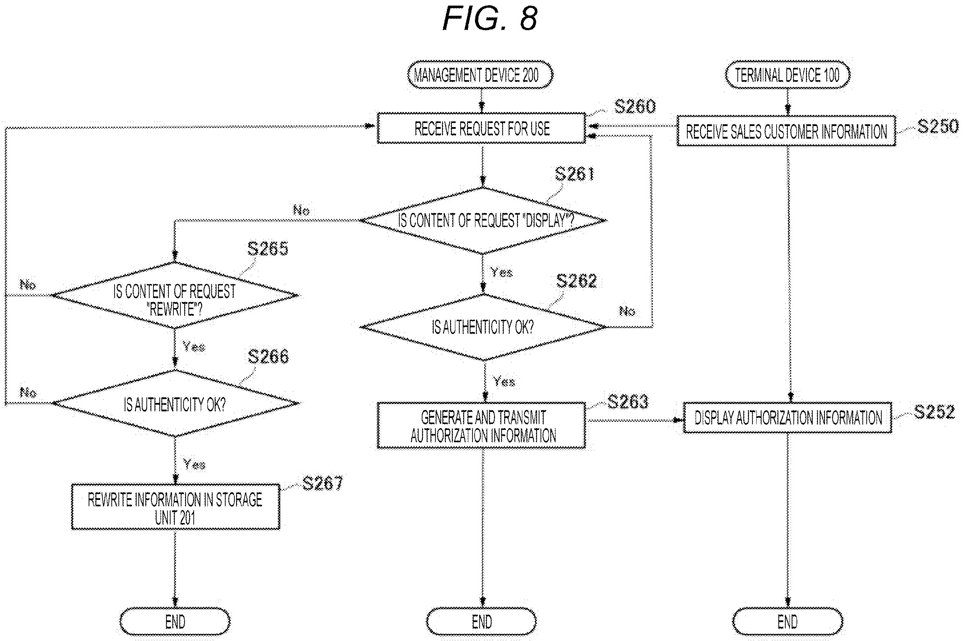

Fig. 8 is a flowchart illustrating exemplary operation of the spectacle lens management system 1 according to the embodiment of the present disclosure.

In the present embodiment, the spectacle management system 1 inputs a request for use from each terminal device 100 (step S250), and the management device 200 receives the request for use from each terminal device 100 in the access management unit 207, for example, when content of a request is input on a request screen (step S260). In a case where content of a request is "display" (step 261), the access management unit 207 first confirms authenticity of access, and then generates authorization information when the authenticity is OK (step S262), and then transmits the generated authorization information to the terminal device 100 (step S263), and the terminal device 100 displays the authorization information on the display device 103 (step 252). In a case where content of a request is "rewrite" (step S265), the access management unit 207 first confirms authenticity of access, and then rewrites information in the storage unit 201 with information input from the terminal device 100 (step S267) when the authenticity is OK (step S266).

Additionally, a policy to indicate access limitation to the storage unit 201 of the management device 200 is set to one of the policy indicating access prohibition and the policies 2 to 3 which permit access to the storage unit 201 described above.

The spectacle lens management system 1 of the present embodiment can manage an expiration date of a spectacle lens in a factory.

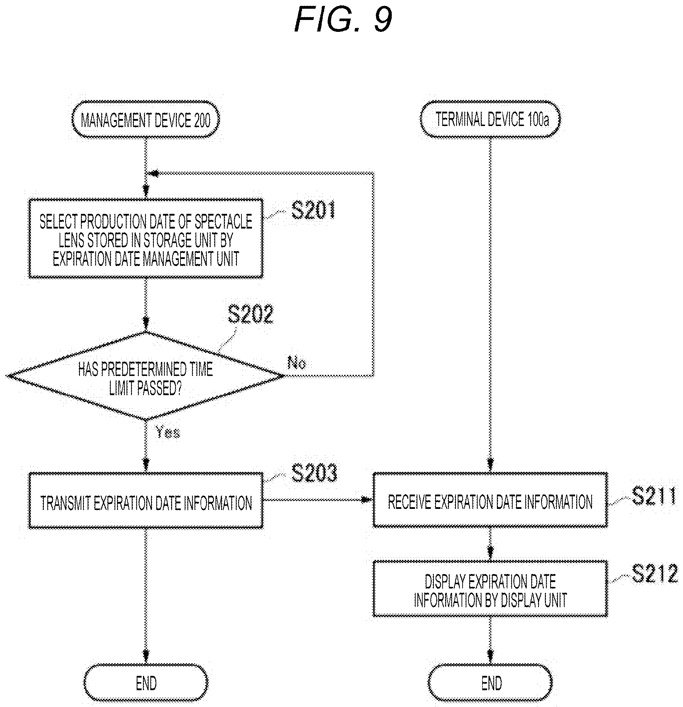

Fig. 9 is a flowchart illustrating exemplary operation of the spectacle lens management system 1 according to the embodiment of the present disclosure.

In the spectacle lens management method according to the present embodiment, the expiration date management unit 205 of the management device 200 selects a production date of a spectacle lens stored in the storage unit 201 (step S201), and the expiration date management unit 205 determines whether a predetermined time limit has passed (step S202), and in a case where the predetermined time limit has passed, the management device 200 transmits the expiration date information (step S203), the terminal device 100a receives the expiration date information (step S211), and the display unit 103 displays the expiration date information (step S212).

With the above-described management method, it is possible to manage inventory of spectacle lenses, and information such as an old spectacle lens substrate having passed the predetermined time limit can be displayed.

In the present embodiment, the terminal device 100b installed in a sales office transmits, as the management information i, distribution route information, a sales contact, a delivery date, and the like to the management device 200 in a manner correlated to identification information on a stealth mark, and the data processing unit 202 of the management device 200 stores the same in the storage unit 201 as sales information 203b.

The terminal device 100b reads identification information from a stealth mark attached to a spectacle lens and transmits the same to the data processing unit 202 of the management device 200, and the data processing unit 202 selects, from the storage unit 201, management information i corresponding to the stealth mark and returns the selected management information i to the terminal device 100b. The terminal device 100b displays, on the display unit 103, the management information i transmitted from the management device 200. With the spectacle lens management system of the present embodiment, for example, an inquiry from a store or an end user can be handled by acquiring management information on an individual spectacle lens.

In the present embodiment, the terminal device 100c installed at a store transmits the sales customer information as the management information i to the management device 200, and the data processing unit 202 of the management device 200 stores the same as the customer clinical record information 203c in the storage unit 201 in a manner correlated to the identification information on the stealth mark.

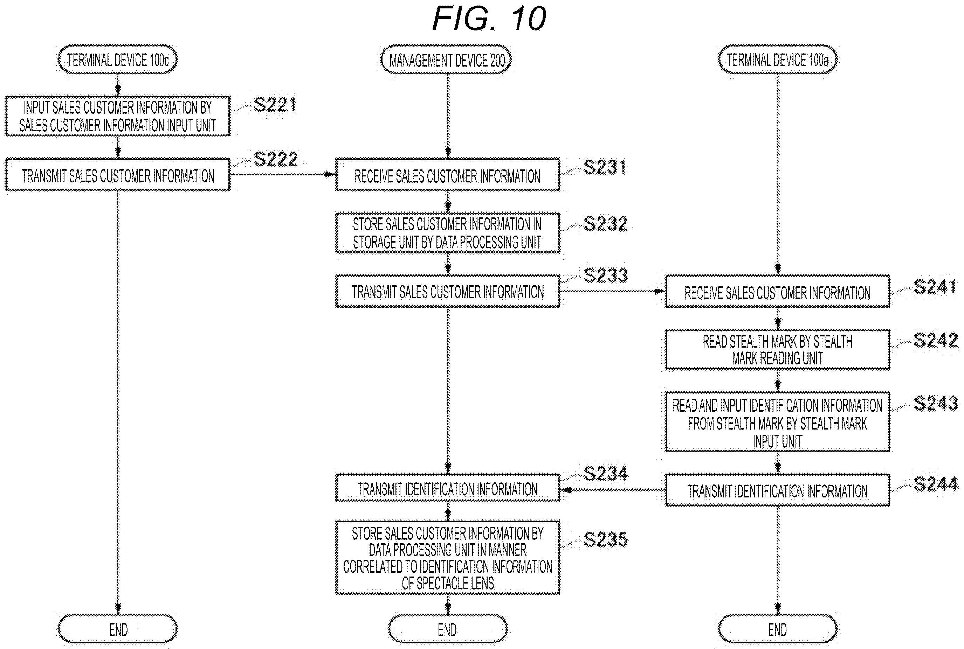

Fig. 10 is a flowchart illustrating exemplary operation of the spectacle lens management system 1 according to the embodiment of the present disclosure.

In the spectacle lens management method according to the present embodiment, the sales customer information input unit 104 of the terminal device 100c inputs sales customer information (step S221), the terminal device 100c transmits the sales customer information to the management device 200 (step S222),
the management device 200 receives the sales customer information (step S231), the data processing unit 202 stores the sales customer information in the storage unit 201 (step S232), the management device 200 transmits the sales customer information to the terminal device 100a (step S233),
the terminal device 100a receives the sales customer information (step S241), the stealth mark reading unit 102 reads a stealth mark formed on a produced spectacle lens (step S242), the stealth mark input unit 101 reads and inputs identification information from the stealth mark (step S243), the terminal device 100a transmits the identification information to the management device 200 (step S244),
the management device 200 receives the identification information (step S234), and the data processing unit 202 stores the sales customer information in the storage unit 201 in a manner correlated to the identification information of the spectacle lens (step S235).

With the above-described management method, a customer clinical record can be automatically created.

A store generally creates a clinical record for each customer in accordance with prescription information at the time of producing a spectacle, but a large storage space is required in the store. A paper clinical record created by the store can be substituted by managing the customer clinical record information with the management system of the present embodiment.

The terminal device 100c installed at a store in the present embodiment transmits, to the management device 200, reproduction order information corresponding to identification information of a spectacle lens in accordance with a reproduction order from an end user, the reproduction information processing unit 204 of the management device 200 selects, from the storage unit 201, the management information i including prescription information on the basis of the identification information of the spectacle lens, and then transmits the same to another terminal device (e.g., terminal device 100a or 100b) .

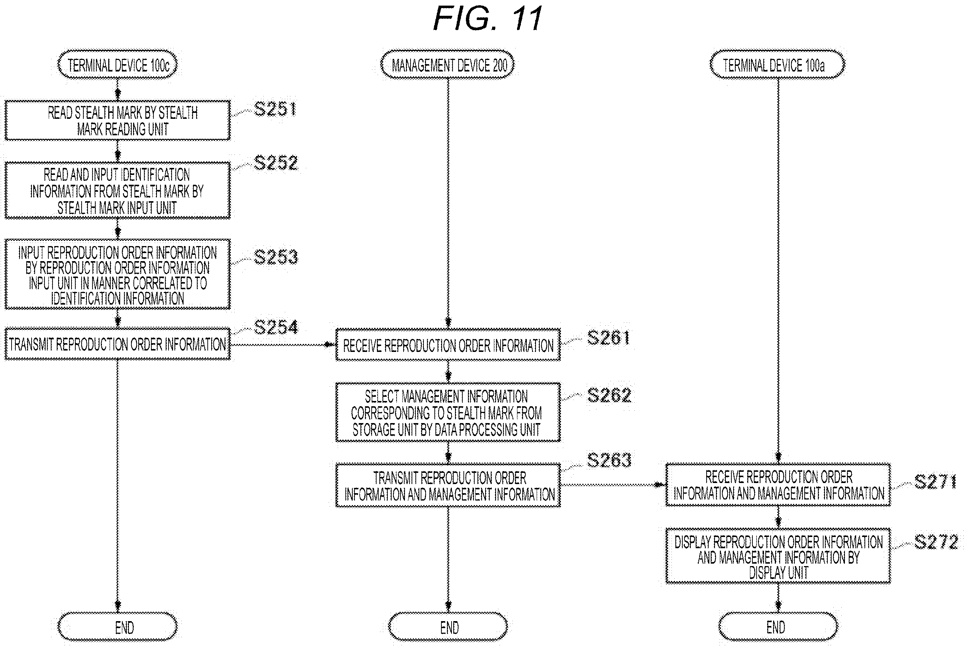

Fig. 11 is a flowchart illustrating exemplary operation of the spectacle lens management system 1 according to the embodiment of the present disclosure.

In the spectacle lens management method according to the present embodiment, the stealth mark reading unit 102 of the terminal device 100c reads a stealth mark (step S251), the stealth mark input unit reads and inputs identification information from the stealth mark (step S252), the reproduction order information input unit 105 inputs reproduction order information in a manner correlated to the identification information of the spectacle lens (step S253), the terminal device 100c transmits the reproduction order information to the management device 200 (step S254),
the management device 200 receives the reproduction order information (step S261), the data processing unit 202 selects, from the storage unit 201, management information i corresponding to the identification information of the spectacle lens (step S262), and the management device 200 transmits the reproduction order information and the management information i to the terminal device 100a (step S263),
the terminal device 100a receives the reproduction order information and the management information i (step S271), and the display unit 103 displays the reproduction order information and the management information i (step S272) .

In a case where there is a spectacle reproduction order from an end user, a store staff can easily place an order for reproduction without obtaining necessary information for reproduction, such as a prescription of the spectacle lens, by reading identification information from a stealth mark attached to a spectacle lens and transmitting the same to the management device 200 by using the spectacle lens management system of the present embodiment.

### Third Embodiment

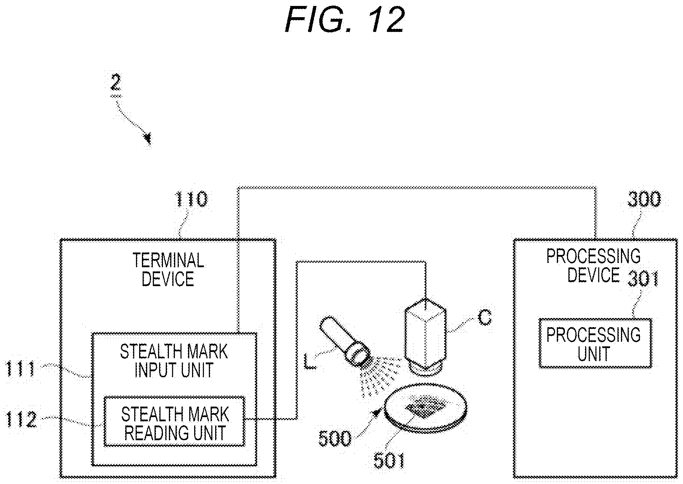

Fig. 12 is a functional block diagram illustrating a configuration of a spectacle lens production system 2 according to a third embodiment.

The spectacle lens production system 2 according to the embodiment of the present disclosure includes a terminal device 110 and a processing device 300.

The terminal device 110 has a stealth mark input unit 111 that reads and inputs a stealth mark attached to a spectacle lens before lens shaping work, and the stealth mark is invisible under visible light and visible under a predetermined wavelength.

The stealth mark input unit includes a stealth mark reading unit 112 that reads the stealth mark which is invisible under the visible light and visible under light of the predetermined wavelength and includes an impregnated region formed from a fluorescent coloring material and formed on the spectacle lens.

The processing device 300 has a processing unit 301 to process a spectacle lens before lens shaping work on the basis of the stealth mark input to the stealth mark input unit 111.

The processing device is a device used to produce a spectacle lens, and examples thereof include a polishing device, a dyeing device, a primer coating device, a hard coating film forming device, an anti-reflection film deposition device, a lens shaping work device, an inspection device, a light modulation/polarization processing device, a marking device (layout mark, design reference point, lens information mark, and the like), and the like.

In the present embodiment, the terminal device 110 and the processing device 300 are directly connected, but the devices may be connected to each other via a network 3.

The terminal device of the present embodiment is also implemented by arbitrary combination of hardware of a computer 60 and software in Fig. 3 described in an above-described embodiment. Respective functions of respective units in the management device and the terminal device can be implemented by a CPU 62 of the computer 60 reading, into a memory (RAM 66), a program stored in a memory unit (ROM 64) such as a hard disk, and executing the program.

As a stealth mark used in the present embodiment, a design reference point, a frame pattern, and the like are preferable. Positioning can be performed by reading a design reference point by irradiating, with the predetermined wavelength, a spectacle lens installed in the processing device.

The stealth mark reading unit 112 reads a stealth mark, the stealth mark input unit 111 inputs the stealth mark and transmits the same to the processing device 300, and the processing unit 301 performs processing on the basis of received information on the stealth mark. Examples of processing can include polishing, dyeing, primer coating, hard coating film forming, anti-reflection film deposition, lens shaping work, inspection, light modulation/polarization processing, and marking (layout mark, design reference point, lens information mark and the like).

Before the processing, lens positioning can be performed on the basis of the stealth mark input to the stealth mark input unit.

### Fourth Embodiment

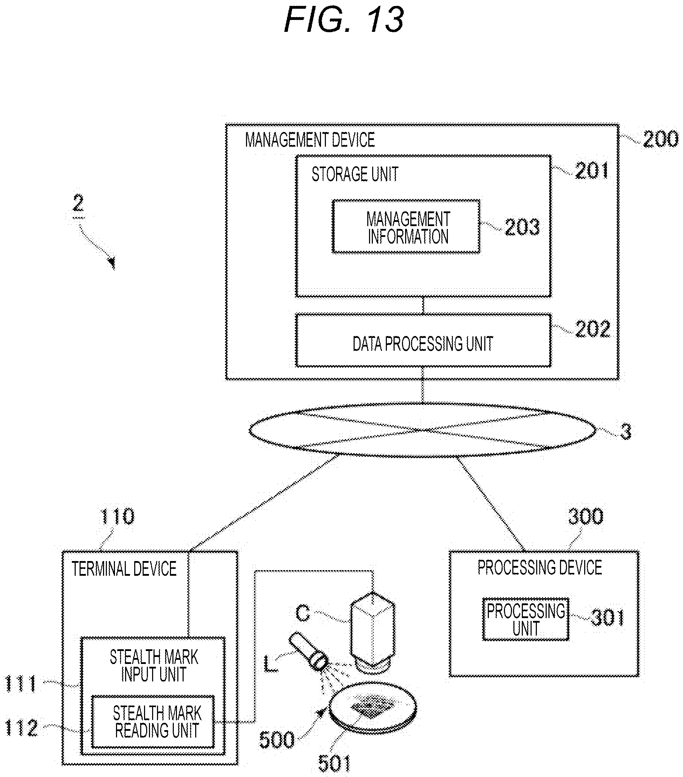

Fig. 13 is a functional block diagram illustrating a configuration of a spectacle lens production system 2 according to a fourth embodiment.

The spectacle lens production system 2 according to the embodiment of the present disclosure further includes a management device 200 in addition to a spectacle lens production system 2 according to a third embodiment.

A terminal device and the management device in the present embodiment at least have functions similar to those of a terminal device 100 and a management device 200 of a first embodiment.

A terminal device 110, the management device 200, and a processing device 300 are mutually connected via a network.

The management device and the terminal device of the present embodiment are also implemented by arbitrary combination of hardware of a computer 60 and software in Fig. 3 described in the above embodiment. Respective functions of respective units in the management device and the terminal device can be implemented by a CPU 62 of the computer 60 reading, into a memory (RAM 66), a program stored in a memory unit (ROM 64) such as a hard disk, and executing the program.

The terminal device 100 reads identification information from a stealth mark attached to a spectacle lens and transmits the same to a data processing unit 202 of the management device 200, and the data processing unit 202 selects, from a storage unit 201, management information i corresponding to the stealth mark and transmits the selected management information i to the processing device 300.

The processing device 300 performs processing on the basis of the management information i transmitted from the management device 200. Since information corresponding to an individual spectacle lens can be displayed by displaying a recipe in a producing process as the management information i, a paper instruction attached to a spectacle lens can be eliminated in a factory, and furthermore, a mix-up handling for a spectacle lens can be prevented.

### Fifth Embodiment

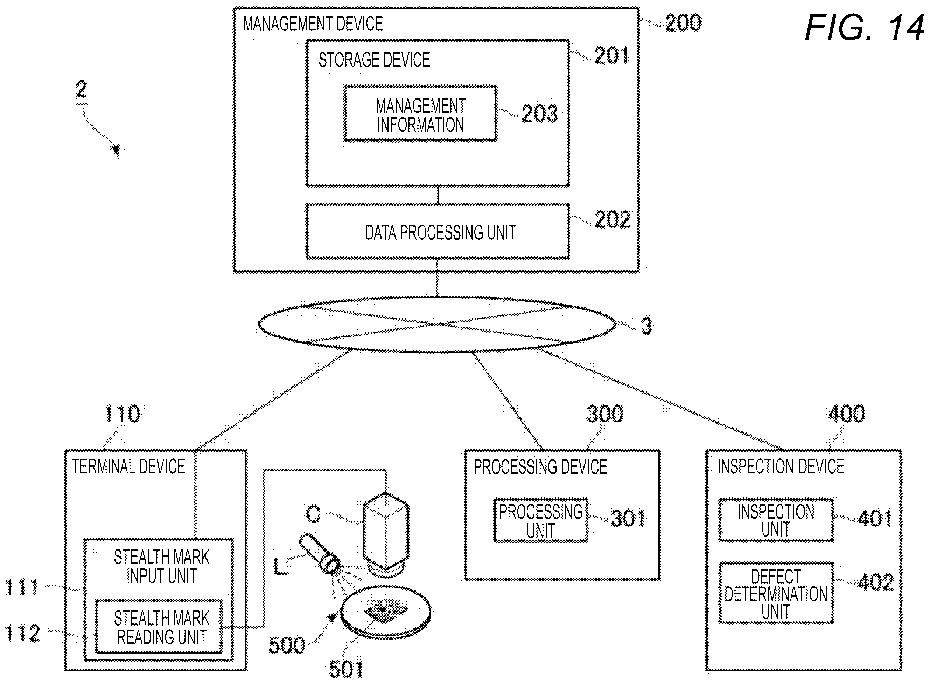

Fig. 14 is a functional block diagram illustrating a configuration of a spectacle lens production system 2 according to a fifth embodiment.

The spectacle lens production system 2 according to the embodiment of the present disclosure further includes an inspection device 400 in addition to a spectacle lens production system according to a fourth embodiment.

The inspection device 400 includes: an inspection unit 401 that inspects a spectacle lens after processing; and a defect determination unit 402 that determines a defect on a spectacle lens by comparing management information i selected by a data processing unit with inspection information obtained from the inspection unit 401.

A terminal device and a management device in the present embodiment at least have functions similar to those of a terminal device 100 and a management device 200 of a first embodiment.

A terminal device 110, a management device 200, a processing device 300, and the inspection device 400 are connected to each other via a network 3.

The management device and the terminal device of the present embodiment are also implemented by arbitrary combination of hardware of a computer 60 and software in Fig. 3 described in the above embodiment. Respective functions of respective units in the management device and the terminal device can be implemented by a CPU 62 of the computer 60 reading, into a memory (RAM 66), a program stored in a memory unit (ROM 64) such as a hard disk, and executing the program.

The terminal device 100 reads identification information from a stealth mark attached to a spectacle lens and transmits the same to a data processing unit 202 of the management device 200, and the data processing unit 202 selects, from a storage unit 201, management information i corresponding to the stealth mark and transmits the selected management information i to the processing device 300.

The processing device 300 compares the management information i transmitted from the management device 200 with the inspection information obtained from the inspection unit, and determines a defect on the spectacle lens. According to the present embodiment, a defect on a spectacle lens can be determined from information corresponding to an individual spectacle lens. According to the present embodiment, a mix-up handling for a spectacle lens can be prevented.

### [Spectacle Lens]

A spectacle lens of the present disclosure will be described in detail below.

A spectacle lens preferably includes a substrate, a primer layer, a hard coating film, and an anti-reflection film. It is preferable that a stealth mark be impregnated with any one selected from a group consisting of a substrate, a primer layer, and a hard coating film.

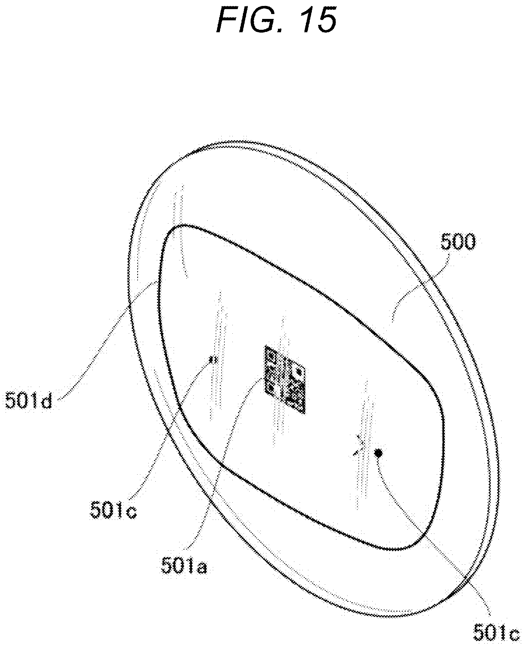

Fig. 15 is a schematic diagram illustrating a structure of a spectacle lens of the first embodiment. A spectacle lens 500 has a stealth mark 501 formed near a boxing center of the spectacle lens. The stealth mark 501 is a two-dimensional code 501a including an impregnated region with a fluorescent coloring material. As a stealth mark, a design reference point 501c and a frame pattern 501d are included.

The stealth mark 501 may not be necessarily formed near the boxing center but inside the frame pattern.

Since the stealth mark 501 is formed in an impregnated manner in the substrate 510, the stealth mark is invisible under visible light and hardly disappears even in a case where a surface of the spectacle lens is wiped or processed.

In the spectacle lens of the present embodiment, the spectacle lens becomes visible when irradiated with light having a predetermined wavelength, for example. Therefore, when the spectacle lens is used as an ordinary spectacle, the stealth mark is not visually recognized but becomes visible when irradiated with the light having the predetermined wavelength, and the two-dimensional code becomes readable.

The fluorescent coloring material may be a fluorescent pigment or a fluorescent colorant.

From the viewpoint of providing a stealth mark, examples of the fluorescent pigment include C.I. Pigment Yellow 12, 13, 14, 17, 20, 24, 55, 74, 83, 86, 93, 97, 98, 109, 110, 117, 120, 125, 128, 137, 138, 139, 147, 148, 150, 151, 153, 154, 155, 166, 168, 180, 185, C.I. Pigment Orange 16, 36, 43, 51, 55, 59, 61, 71, C.I. Pigment Red 9, 48, 49, 52, 53, 57, 97, 122, 123, 149, 168, 175, 176, 177, 180, 192, 202, 209, 215, 216, 217, 220, 223, 224, 226, 227, 228, 238, 240, 254, 255, 272, C.I. Pigment Violet 19, 23, 29, 30, 37, 40, 50, C.I. Pigment Blue 15, 15: 1, 15: 3, 15: 4, 15: 6, 22, 60, 64, C.I. Pigment Green 7, 36, C.I. Pigment Brown 23, 25, 26, and the like. These pigments may be used alone or in combination of two or more thereof.

Specific examples of the fluorescent colorant include C.I. Basic Red 1, 2, 9, 12, 13, 14, 17, C.I. Basic Violet 1, 3, 7, 10, 11: 1, 14, C.I. Acid Red 51, 52, 92, 94, C.I. Direct Yellow 11, 24, 26, 87, 100, 132, 147, C.I. Direct Orange 26, 29, 29: 1, 46, C.I. Direct Red 1, 13, 17, 239, 240, 242, 254, C.I. Fluorescent Brightener 91, 162: 1, and the like. These dyes may be used alone or in combination of two or more thereof.

From the viewpoint of enhancing permeability and improving distinguishability, the fluorescent coloring material is preferably at least one kind selected from a group consisting of a quinophthalone pigment, a coumarin pigment, and a naphthalimide colorant, more preferably, at least one kind selected from a group consisting of a quinophthalone pigment and a coumarin pigment, still more preferably, a quinophthalone pigment, furthermore preferably, C.I. Pigment Yellow 138, and still furthermore preferably, B type quinophthalone.

Examples of commercially available products of the fluorescent coloring material include: a B-type quinophthalone pigment (C.I. Pigment Yellow 138) manufactured by Fuji Dye Kogyo Co., Ltd.; trade name "Mikawhite" ATN conc, KTS extraconc manufactured by Nippon Kayaku Co., Ltd.; and "Kayalight" B, OS, and OSN manufactured by Nippon Kayaku Co., Ltd.

The spectacle lens production method of the present disclosure includes, for example, a process of placing ink containing a coloring material on a spectacle lens (hereinafter also referred to as "process 1") and a process of heating the spectacle lens on which the ink is placed (hereinafter also referred to as "process 2").

The ink used in the process 1 preferably contains a fluorescent coloring material, a permeation auxiliary, a high boiling point solvent, and water.

A content rate of the fluorescent coloring material in the ink is, preferably, 1 to 15 mass%, more preferably, 2 to 10 mass%, still more preferably, 3 to 8 mass%.

As the permeation auxiliary, a nitrogen-containing cyclic compound is preferable, and N-methyl-2-pyrrolidone is more preferable from the viewpoint of enhancing permeability and improving mark distinguishability.

A content rate of the permeation auxiliary is, preferably, from 0.1 to 10 mass%, more preferably, 0.5 to 10 mass%, and still more preferably, 1.0 to 5.0 mass% from the viewpoint of enhancing the permeability of a color material in ink.

Examples of the high boiling point solvent include oxyethylene such as triethylene glycol, tetraethylene glycol, tripropylene glycol, or an oxypropylene addition polymer; triol such as glycerin; thiodiglycol; lower alkyl glycol ethers such as triethylene glycol mono-ethyl ether and triethylene glycol mono-butyl ether; lower dialkyl glycol ethers such as triethylene glycol diethyl ether, tetraethylene glycol dimethyl ether, and tetraethylene glycol diethyl ether. These high boiling point solvents may be used alone or in combination of two or more.

Among these examples, glycerin is preferable as the high boiling point solvent.

A content rate of the high boiling point solvent is, preferably, 30 to 80 mass%, more preferably, 35 to 70 mass%, and still more preferably, 40 to 60 mass% in the ink.

Examples of the water include tap water, pure water, ion-exchanged water, and the like.

A content rate of the water in the ink is, preferably, 30 to 80 mass%, more preferably, 35 to 70 mass%, and still more preferably, 40 to 60 mass%.

From the viewpoint of placing ink by an inkjet recording method, viscosity of the ink is, preferably, 1 mPa·s or more, more preferably, 5 mPa·s or more, and still more preferably, 10 mPa·s or more, and preferably, 40 mPa·s or less, more preferably, 35 mPa·s or less, and still more preferably, 30 mPa·s or less.

The viscosity of the ink is measured by using an E type viscometer (e.g., "RE-80L viscometer" manufactured by Toki Sangyo Co., Ltd., and the like) under the condition of a temperature condition of 25°C in accordance with JIS Z 8803.

A pH of the ink is, preferably, 3.0 or more, more preferably, 3.5 or more, and still more preferably, 4.0 or more, and preferably, 12 or less, more preferably, 11 or less, and still more preferably, 10 or less.

The pH of the ink can be measured by using a pH meter (e.g., trade name "D-51" manufactured by HORIBA or the like) under the condition of a temperature condition of 25°C.

In the process 1, an ink placement method can be selected in accordance with a mark formed on a spectacle lens and is not particularly limited, and examples thereof include an inkjet recording method, a stamp, and the like. Examples of the inkjet recording method include: (i) a continuous system in which printing on an article is performed by continuously jetting ink droplets from a nozzle and controlling jetting directions of the droplets by electric charge; (ii) an on-demand system in which an ink droplet is selectively jetted from a nozzle by applying pressure only at the time of printing; and the like.

Among these methods, the on-demand system is preferable.

Examples of the on-demand system include a piezoelectric system and a thermal system.

These inkjet recording methods can be performed by a known method.

In the process 2, a spectacle lens on which ink is placed is heated in order to permeate the ink.

A heating temperature in the process 2 is, preferably, 50 to 120°C, more preferably, 60 to 110°C, and still more preferably, 70 to 100°C from the viewpoint of permeating the ink.

After the above-described heating, operation to remove the ink remaining on the spectacle lens may be performed.

Note that a primer layer, a hard coating film, and an anti-reflection film can be formed by a known method.

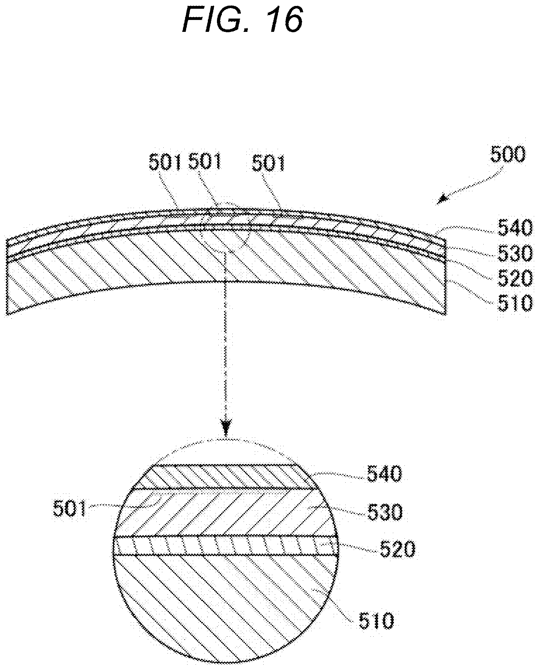

Fig. 16 is a cross-sectional view to describe a structure of a spectacle lens 500 of the second embodiment. The spectacle lens 500 of the present embodiment includes a substrate 510, a primer layer 520, a hard coating film 530, an anti-reflection film 540, and a stealth mark 501 formed in the hard coating film 530 in a manner impregnated with a color material.

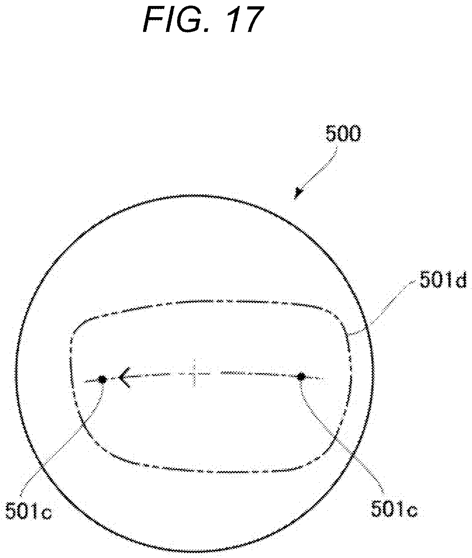

Fig. 17 is a schematic diagram illustrating a structure of a spectacle lens according to the third embodiment. The spectacle lens of the third embodiment includes, as a stealth mark 501, a design reference point 501c and a frame pattern 501d.

Since the design reference point 501c cannot be visually recognized under the visible light, there is no problem in use as an ordinary spectacle lens even in a case where the design reference point is printed relatively large. On the other hand, since the design reference point can be clearly visually recognized when irradiated with light having a predetermined wavelength, operators in a factory and a store can easily confirm the design reference point, and no skilled technique is required.

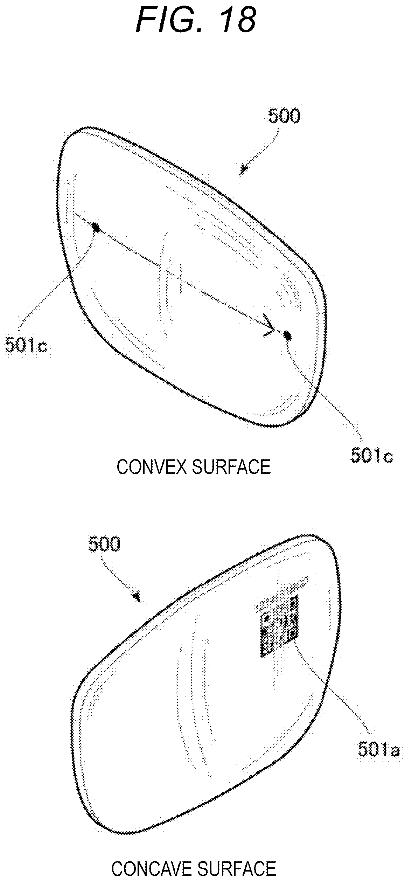

Fig. 18 is a schematic diagram illustrating a structure of a spectacle lens according to the fourth embodiment.

The spectacle lens of the fourth embodiment includes, as a stealth mark 501, a two-dimensional code 501a, an alphanumeric character 501b, and a design reference point 501c. The two-dimensional code and the alphanumeric character are formed of an impregnated region provided on a concave surface. The design reference point is formed of an impregnated region provided on a convex surface.

A substrate of a spectacle lens usually contains an ultraviolet absorber. Therefore, the stealth mark provided on the concave surface does not become visible even in a case of being irradiated with ultraviolet light from the convex surface side. In other words, even in a case where the stealth mark is located under an ultraviolet light environment like black light, the stealth mark is not observed from the convex surface side.

On the other hand, since the design reference point is provided on the convex surface, in a case of using the design reference point for alignment during production, there is no influence of refraction of the substrate and a position can be accurately identified.

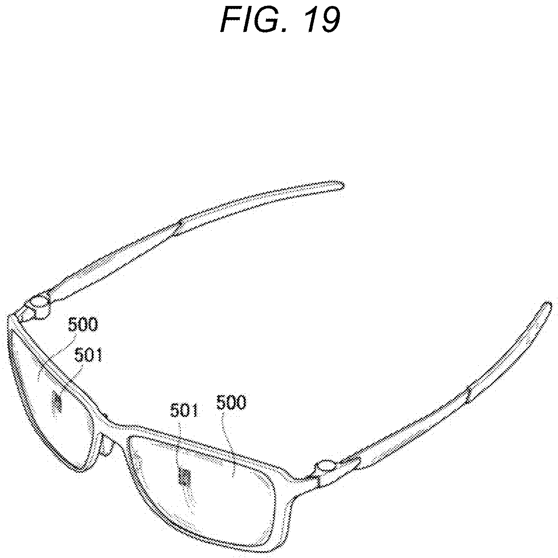

Fig. 19 is a schematic diagram illustrating a use mode of the spectacle lens according to the present disclosure.

The stealth mark 501 may not be necessarily formed near the boxing center but inside the frame pattern.

In the spectacle lens of the present disclosure, since the stealth mark is formed near the boxing center or inside the frame pattern, the mark remains even after lens shaping work, and identification information of the spectacle lens can be read even after the spectacle lens is delivered to an end user.

### [Examples]

Specific examples will be described below, but the scope of claims is not limited by the following examples.

### Example 1 and Reference Examples 1 and 2

### [Ink Preparation]

Ink was prepared by mixing respective components in Table 1 below. Note that aqueous dispersion of a pigment was "FSP LM 32E orange" manufactured by Fuji Dye Kogyo Co., Ltd., and a solid content concentration in the dispersion was 40 mass%.

### [Preparation of Spectacle Lens]

The ink illustrated in Table 1 was dropped onto a substrate having a refractive index of 1.67 (thiourethane plastic lens "EYNOA" manufactured by HOYA Corporation) to form a droplet (process 1), and the heating process was applied at 80°C for 15 minutes (process 2). After that, a spectacle lens was obtained by wiping the ink adhering to the surface.

### [Evaluation on Ink Distinguishability 1]

Evaluation was made on ink distinguishability by visually observing a spectacle lens under a fluorescent light on the basis of following guidelines.
A: a droplet shape can be confirmed on a spectacle lens surface.
B: only a droplet outline shape can be confirmed on a spectacle lens surface.
C: a droplet shape cannot be confirmed on a spectacle lens surface.

### [Table 1]

**TABLE 1**

| | | EXAMPLE 1 | REFERENCE EXAMPLE 1 | REFERENCE EXAMPLE 2 |
|---|---|---|---|---|
| COMPOUNDED AMOUNT (PTS. MASS) | AQUEOUS DISPERSION OF PIGMENT | 50 | 100 | 50 |
| | NMP | 25 | - | - |
| | GLYCERIN | 25 | - | 50 |
| EVALUATION | DISTINGUISHABILITY | A | C | C |

### Reference Examples 3 to 5

### [Ink Preparation]

Ink was prepared by mixing respective components in Table 2 below. Note that aqueous dispersion of a pigment was "FSP LM 32E orange" manufactured by Fuji Dye Kogyo Co., Ltd., and a solid content concentration in the dispersion was 40 mass%.

### (Permeation Auxiliaries)

P-2: UV CYASORB (UV24) (trade name, 2,2'-dihydroxy-4-methoxybenzophenone manufactured by Sun Chemical Company Ltd., melting point 73-75°C, boiling point 170-175°C (1 mm Hg))
P-3: DAINSORB T-O (trade name, 2-(2',4'-dihydroxyphenyl) benzotriazole manufactured by Daiwa Fine Chemicals Co., Ltd., boiling point 485°C (760 mmHg))
P-4: KEMI-SORB 71 (trade name, manufactured by Chemipro Kasei Co., Ltd.)

### [Preparation of Spectacle Lens]

The ink illustrated in Table 2 was dropped onto a substrate having a refractive index of 1.67 (thiourethane plastic lens "EYNOA" manufactured by HOYA Corporation) to form a droplet (process 1), and heating process was applied at 80°C for 15 minutes (process 2). Evaluation was made in accordance with the above-described method of [Evaluation on Ink Distinguishability 1]

### [Table 2]

**TABLE 2**

| | | | REFERENCE EXAMPLE 3 | REFERENCE EXAMPLE 4 | REFERENCE EXAMPLE 5 |
|---|---|---|---|---|---|
| COMPOUNDED AMOUNT (PTS. MASS) | AQUEOUS DISPERSION OF PIGMENT | | 50 | 50 | 50 |
| | PERMEATION AUXILIARY | KIND | P-2 | P-3 | P-4 |
| | | AMOUNT | 0.25 | 0.25 | 0.25 |
| | GLYCERIN | | 49.7 | 49.7 | 49.7 |
| EVALUATION | DISTINGUISHABILITY | | C | C | C |

### Examples 2 to 5

### [Ink Preparation]

Ink was prepared by mixing respective components in Table 3 below.

### (Pigments)

C-1: KIWA-JET (trade name) pigment ink (cyan), manufactured by KIWA Chemical Industry Co., Ltd.
C-2: KIWA-JET (trade name) pigment ink (magenta), manufactured by KIWA Chemical Industry Co., Ltd.
C-3: KIWA-JET (trade name) pigment ink (yellow), manufactured by KIWA Chemical Industry Co., Ltd.
C-4: KIWA-JET (trade name) pigment ink (black), manufactured by KIWA Chemical Industry Co., Ltd.

### [Preparation of Spectacle Lens]

A substrate having a refractive index of 1.60 (thiourethane plastic lens "EYAS" manufactured by HOYA Corporation),
a substrate having a refractive index of 1.67 (thiourethane type plastic lens "EYNOA" manufactured by HOYA Corporation), and
a substrate having a refractive index of 1.70 (polysulfide type plastic lens "EYRY" manufactured by HOYA Corporation) were used, and the ink illustrated in Table 1 was dropped on the respective substrates (process 1) to form droplets, and the droplets were heated at 80°C for 15 minutes (process 2). After that, a spectacle lens was obtained by wiping the ink adhering to the surface. Evaluation was made in accordance with the above-described method of [Evaluation on Ink Distinguishability 1]

**[Table 3]**

| | | | EXAMPLE 2 | EXAMPLE 3 | EXAMPLE 4 | EXAMPLE 5 |
|---|---|---|---|---|---|---|
| COMPOUNDED AMOUNT (PTS. MASS) | AQUEOUS DISPERSION OF PIGMENT | KIND | C-1 | C-2 | C-3 | C-4 |
| | | AMOUNT | 50 | 50 | 50 | 50 |
| | NMP | | 1 | 1 | 1 | 1 |
| | GLYCERIN | | 49 | 49 | 49 | 49 |
| EVALUATION ON DISTINGUISHABILITY | REFRACTIVE INDEX OF SUBSTRATE | 1.60 | A | A | A | A |
| | | 1. 67 | A | A | A | A |
| | | 1.70 | A | A | A | A |

### Examples 6 to 9

### [Preparation of Stealth Ink]

Ink was prepared by mixing respective components in Table 4 below.

### (Pigments)

CS-1: B type quinophthalone pigment (C.I. Pigment Yellow 138, FUJI SP Green 510 manufactured by Fuji Dye Kogyo Co., Ltd.)
CS-2: Coumarin type pigment (molecular weight 250 to 350, FUJI SP Blue 511 manufactured by Fuji Pigment Co., Ltd.)

### (Permeation Auxiliary)

P-1: N-methyl-2-pyrrolidone

### (High Boiling Point Solvent)

H-1: glycerin

### [Preparation of Spectacle Lens]

The ink illustrated in Table 4 was dropped onto a substrate having a refractive index of 1.67 (thiourethane plastic lens "EYNOA" manufactured by HOYA Corporation) to form a droplet (process 1), and heating process was applied for 15 minutes at temperatures listed in Table 4 (process 2). After that, a spectacle lens was obtained by wiping the ink adhering to the surface. In all of the cases, a droplet shape could not be confirmed under the visible light.

### [Evaluation on Ink Distinguishability 2]

Evaluation was made on ink distinguishability by visually observing a spectacle lens under irradiation with ultraviolet light of 280 to 400 nm.
A: a droplet shape can be confirmed on a spectacle lens surface.
B: only a droplet outline shape can be confirmed on a spectacle lens surface.
C: a droplet shape cannot be confirmed on a spectacle lens surface.

### [Evaluation on Surface Roughness]

Evaluation was made on surface roughness in accordance with following guidelines by visually observing a spectacle lens under a fluorescent lamp and observing a surface of the spectacle lens.
A: surface roughness cannot be confirmed on a spectacle lens surface
B: surface roughness can be confirmed only at a droplet outline on a spectacle lens surface.
C: clear surface roughness can be confirmed in spectacle lens surface.

### [Table 4]

**TABLE 4**

| | | | | EXAMPLE 6 | EXAMPLE 7 | EXAMPLE 8 | EXAMPLE 9 |
|---|---|---|---|---|---|---|---|
| INK | COLOR COMPONENT | | KIND | CS-1 | CS-1 | CS-1 | CS-2 |
| | | | AMOUNT (MASS%) | 5.00 | 20.00 | 40.00 | 5.00 |
| | PERMEATION AUXILIARY | | KIND | P-1 | P-1 | P-1 | P-1 |
| | | | AMOUNT (MASS%) | 1.25 | 5.00 | 10.00 | 1.25 |
| | HIGH BOILING POINT SOLVENT | | KIND | H-1 | H-1 | H-1 | H-1 |
| | | | AMOUNT (MASS%) | 43.75 | 25.00 | 0.00 | 43.75 |
| | WATER | | AMOUNT (MASS%) | 50.00 | 50.00 | 50.00 | 50.00 |
| DISTINGUISHABILITY | | HEATING TEMP. IN PROCESS 2 | 90°C | A | A | A | A |
| | | | 85°C | A | A | A | A |
| | | | 78°C | A | A | A | A |
| SURFACE ROUGHNESS | | HEATING TEMP. IN PROCESS 2 | 90°C | A | C | C | A |
| | | | 85°C | A | C | C | A |
| | | | 78°C | A | A | C | A |

The present specification discloses the following embodiments.
[1-1] An optical component management system including:
   a stealth mark input unit that reads and inputs identification information from a stealth mark that is invisible under visible light and visible under a predetermined wavelength;
   a storage unit that stores management information on the optical component; and
   a data processing unit that receives the identification information from the stealth mark input unit and selects management information corresponding to the stealth mark from the storage unit,
   in which the stealth mark input unit includes a stealth mark reading unit that reads a stealth mark which is invisible under the visible light and visible under light of the predetermined wavelength.
[1-2] An optical component management method, including the steps of:
   reading a stealth mark that is invisible under visible light and visible under light of a predetermined wavelength;
   reading and inputting identification information from the stealth mark that is invisible under the visible light and visible under the predetermined wavelength; and
   receiving the identification information read in the stealth mark inputting, and selecting management information corresponding to the stealth mark from the storage unit that stores management information on an optical component.
[1-3] The optical component management system recited in [1], further including a terminal device and a management device,
   in which the terminal device includes the stealth mark input unit and the stealth mark reading unit, and
   the management device includes the storage unit and the data processing unit.
[1-4] A program causing a terminal device included in the optical component management system recited in above-described [3] to function as a stealth mark input unit that reads and inputs identification information from a stealth mark that is invisible under visible light and visible under a predetermined wavelength, and also function as a stealth mark reading unit that reads a stealth mark which is invisible under the visible light and visible under light of the predetermined wavelength.
[1-5] A program causing a management device included in the optical component management system recited in above-described [3] to function as a storage unit that stores management information on an optical component, and also function as a data processing unit that receives identification information from the stealth mark input unit and selects management information corresponding to a stealth mark from the storage unit.
[2-1] An optical component production system including:
   a stealth mark input unit that reads and inputs a stealth mark which is attached to an optical component before lens shaping work and invisible under visible light and visible under a predetermined wavelength; and
   a processing unit that processes the optical component before the lens shaping work on the basis of the stealth mark input to the stealth mark input unit,
   in which the stealth mark input unit includes a stealth mark reading unit that reads a stealth mark that is invisible under the visible light and visible under light of the predetermined wavelength.
[2-2] An optical component production method including the steps of:
   reading a stealth mark that is invisible under visible light and visible under light of a predetermined wavelength;
   reading and inputting a stealth mark which is attached to an optical component before the lens shaping work and invisible under the visible light and visible under the predetermined wavelength; and
   processing the optical component before the lens shaping work on the basis of the stealth mark input to a stealth mark input unit.

Lastly, the first and second embodiments of the present disclosure will be summarized using the drawings and the like.

As illustrated in Fig. 1, the first embodiment of the present disclosure is the spectacle lens management system 1 including:
the terminal device 100 including the stealth mark input unit 101 that reads and input identification information from a stealth mark that is invisible under visible light and visible under a predetermined wavelength; and
the management device 200 that includes: the storage unit 201 that stores management information I on a spectacle lens; and the data processing unit 202 that receives the identification information from the stealth mark input unit 101 and selects management information i corresponding to this stealth mark from the storage unit,
in which the stealth mark input unit 101 includes the stealth mark reading unit 102 that is invisible under the visible light and visible under light of the predetermined wavelength, and reads a stealth mark 501 including an impregnated region formed from a fluorescent coloring material and formed on the spectacle lens.

As described above, the spectacle lens management system 1 according to the present embodiment can manage information on a spectacle lens by reading a stealth mark formed on the spectacle lens. Since the stealth mark includes an impregnated region impregnated with a fluorescent coloring material, the stealth mark cannot be visually recognized under the visible light and can be confirmed only when irradiated with the predetermined wavelength. Therefore, there is no problem in usual use as a spectacle lens, and history information on a spectacle from production to distribution of the spectacle lens can be managed by a stealth mark. As a result, a spectacle store can utilize the spectacle lens management system of the present disclosure for customer management, customer support, and after-sales service, more specifically, can utilize the system as: a chart-less system by managing customer clinical records with electronic data; a sales promotion tool to manage spectacle lens manufacturer's product warranty, store's product warranty, issuance timing of a direct mail; assistance for reproduction of a spectacle lens, and the like.

As illustrated in Fig. 2, the second embodiment of the present disclosure is the spectacle lens management system 1 including:
the terminal device 100a installed in a factory, and having the stealth mark input unit 101 that reads and inputs identification information from a stealth mark that is invisible under visible light and visible under a predetermined wavelength;
the terminal device 100b installed at a sales office of a spectacle lens manufacturer, and having the stealth mark input unit 101 that reads and inputs identification information from a stealth mark that is invisible in the visible light region;
the terminal device 100c installed in a spectacle store, and having the stealth mark input unit 101 that reads and inputs identification information from a stealth mark that is invisible under the visible light and visible under the predetermined wavelength; and
the management device 200 including: the storage unit 201 that stores management information I on a spectacle lens; and the data processing unit 202 that receives identification information from the stealth mark input unit 101 and selects, from the storage unit 201, management information i corresponding to the stealth mark,
in which the stealth mark input unit 101 includes the stealth mark reading unit 102 that reads a stealth mark which is invisible under the visible light and visible under light of the predetermined wavelength and includes an impregnated region formed from a fluorescent coloring material and formed on the spectacle lens.

Since surface treatment information, layout information, and the like in a producing process are displayed as the management information, information corresponding to an individual spectacle lens can be displayed, and therefore, a paper instruction attached to a spectacle lens can be eliminated in a factory.

A store generally creates a clinical record for each customer in accordance with prescription information at the time of producing a spectacle, but a large storage space is required in the store. A paper clinical record created by the store can be substituted by managing customer clinical record information with the spectacle lens management system of the present embodiment.

In a case where there is a spectacle reproduction order from an end user, a store staff can easily place an order for reproduction without obtaining necessary information for reproduction, such as a prescription of the spectacle lens, by reading identification information from a stealth mark attached to a spectacle lens and transmitting the same to the management device 200 by using the spectacle lens management system of the present embodiment.

Lastly, the third to fifth embodiments of the present disclosure will be summarized using the drawings and the like.

As illustrated in Fig. 12, the spectacle lens production system 2 according to the third embodiment of the present disclosure includes the terminal device 110 and a processing device 300,
the terminal device 110 includes the stealth mark input unit 111 that reads and inputs a stealth mark which is attached to a spectacle lens before lens shaping work and invisible under visible light and visible under a predetermined wavelength,
the stealth mark input unit includes the stealth mark reading unit 112 that reads a stealth mark which is invisible under visible light and visible under light of the predetermined wavelength and includes an impregnated region formed from a fluorescent coloring material and formed on the spectacle lens, and
the processing device 300 includes the processing unit 301 that processes a spectacle lens before the lens shaping work on the basis of the stealth mark input to the stealth mark input unit 110.

As the stealth mark used in the present embodiment, a design reference point, a frame pattern, and the like are preferable. Positioning can be performed by reading a design reference point by irradiating, with the predetermined wavelength, a spectacle lens installed in the processing device.

As illustrated in Fig. 13, the spectacle lens production system 2 according to the fourth embodiment further includes the management device 200 in addition to the spectacle lens production system 2 according to the third embodiment.

The processing device 300 performs processing on the basis of management information transmitted from the management device 200. Since information corresponding to an individual spectacle lens can be displayed by displaying a recipe in a producing process as the management information, a paper instruction attached to a spectacle lens can be eliminated in a factory, and furthermore, a mix-up handling for a spectacle lens can be prevented.

As illustrated in Fig. 14, the spectacle lens production system 2 according to the fifth embodiment further includes the inspection device 400 in addition to the spectacle lens production system according to the fourth embodiment.

The inspection device 400 includes: the inspection unit 401 that inspects a spectacle lens after processing; and the defect determination unit 402 that determines a defect on a spectacle lens by comparing management information selected by the data processing unit with inspection information obtained from the inspection unit.

The processing device 300 compares the management information transmitted from the management device 200 with the inspection information obtained from the inspection unit, and determines a defect of the spectacle lens. Since a defect of a spectacle lens can be determined from information corresponding to an individual spectacle lens, and a mix-up handling for a spectacle lens can be further prevented.

Lastly, the first to fourth embodiments of the spectacle lens of the present disclosure are summarized using the drawings and the like.

As illustrated in Fig. 15, the spectacle lens 500 of the first embodiment has the stealth mark 501 formed near the boxing center of the spectacle lens. The stealth mark 501 is a two-dimensional code including an impregnated region impregnated with a fluorescent coloring material.

Since the stealth mark 501 is formed in an impregnated manner in the substrate 510, the stealth mark is invisible under visible light and hardly disappears even in a case where a surface of the spectacle lens is wiped or processed.

In the spectacle lens of the present embodiment, the spectacle lens becomes visible when irradiated with light having a predetermined wavelength, for example. Therefore, when the spectacle lens is used as an ordinary spectacle, the stealth mark is not visually recognized but becomes visible when irradiated with the light having the predetermined wavelength, and the two-dimensional code becomes readable.

As illustrated in Fig. 16, the spectacle lens 500 of the second embodiment includes the substrate 510, primer layer 520, hard coating film 530, anti-reflection film 540, and stealth mark 501 that is formed in the hard coating film 530 in a manner impregnated with a color material.

As illustrated in Fig. 17, the spectacle lens of the third embodiment includes, as the stealth mark 501, the design reference point 501c and the frame pattern 501d.

Since the design reference point 501c cannot be visually recognized under the visible light, there is no problem in use as an ordinary spectacle lens even in a case where the design reference point is printed relatively large. On the other hand, since the design reference point can be clearly visually recognized when irradiated with light having a predetermined wavelength, operators in a factory and a store can easily confirm the design reference point, and no skilled technique is required.

As illustrated in Fig. 18, the spectacle lens of the fourth embodiment includes, as the stealth mark 501, the two-dimensional code 501a, alphanumeric character 501b, and design reference point 501c. The two-dimensional code and the alphanumeric character are formed of an impregnated region provided on a concave surface.

A substrate of a spectacle lens usually contains an ultraviolet absorber. Therefore, the stealth mark provided on the concave surface does not become visible even in a case of being irradiated with ultraviolet light from the convex surface side. In other words, even in a case where the stealth mark is located under the ultraviolet light environment like black light, the stealth mark is not observed from the convex surface side. On the other hand, since the design reference point is provided on the convex surface, in a case of using the design reference point for alignment during production, there is no influence of refraction of the substrate and a position can be accurately identified.

The present disclosure includes the following.
<1a> An optical component including a stealth mark that is invisible under visible light and visible under a predetermined wavelength,
   in which the stealth mark includes an impregnated region formed from a fluorescent coloring material and formed on an optical component.
<2a> The optical component recited in <1a>, in which the optical component is a spectacle lens.
<3a> The optical component recited in <2a>, further including a substrate, a primer layer, a hard coating film, and an anti-reflection film,
   in which the stealth mark is impregnated in any one selected from a group consisting of the substrate, the primer layer, and the hard coating film.
<4a> The optical component recited in <3a>, in which
   the substrate has a convex surface and a concave surface, and
   the stealth mark is formed on a convex surface side.
<5a> The optical component recited in <3a> or <4a>, in which
   the substrate has a convex surface and a concave surface, and
   the stealth mark is formed on a concave surface side.
<6a> The optical component recited in any one of <2a> to <5a>, in which the stealth mark is formed near a boxing center of a spectacle lens or inside a frame pattern.
<7a> The optical component recited in any one of <1a> to <6a>, in which the stealth mark includes a one-dimensional code or a two-dimensional code.
<8a> The optical component recited in any one of <1a> to <7a>, in which the stealth mark includes a character.
<9a> The optical component recited in any one of <1a> to <8a>, in which the stealth mark includes a design reference point.
<10a> The optical component recited in any one of <1a> to <9a>, in which the stealth mark includes a frame pattern.
<1b> An optical component management system including:
   a stealth mark input unit that reads and inputs identification information from a stealth mark that is invisible under visible light and visible under a predetermined wavelength;
   a storage unit that stores management information on an optical component; and
   a data processing unit that receives the identification information from the stealth mark input unit and selects management information corresponding to the stealth mark from the storage unit,
   in which the stealth mark input unit includes a stealth mark reading unit that reads a stealth mark which is invisible under the visible light and visible under light of the predetermined wavelength and includes an impregnated region formed from a fluorescent coloring material and formed on an optical component.
<2b> The optical component management system recited in <1b>, in which the optical component is a spectacle lens.
<3b> The optical component management system recited in <2b>, in which the stealth mark is formed near a boxing center of a spectacle lens or inside a frame pattern.
<4b> The optical component management system recited in <2b> or <3b>, in which the stealth mark includes a one-dimensional code or a two-dimensional code.
<5b> The optical component management system recited in any one of claims <2b> to <4b>, in which the stealth mark includes a character.
<6b> The spectacle lens management system recited in any one of <2b> to <5b>, in which the stealth mark includes a design reference point.
<7b> The optical component management system recited in any one of <2b> to <6b>, in which the management information includes at least one kind selected from a group consisting of production information, sales information, and customer clinical record information.
<8b> The optical component management system recited in <7b>, in which the production information includes at least one kind selected from a lens material, a design type, production history information, a producing factory, a production date, prescription information, quality information, surface treatment information, layout information, R/L identification information, and design reference point information.
<9b> The optical component management system recited in <7b>, in which that sales information includes at least one kind selected from distribution route information, a sales contact, and a delivery date.
<10b> The optical component management system recited in <7b>, in which the customer clinical record information includes at least one kind selected from a name, a date of birth, optometry information, prescription of a spectacle lens, and a date of sales.
<11b> The optical component management system recited in any one of <1b> to <10b>, further including a terminal device and a management device,
   in which
   the terminal device includes the stealth mark input unit and the stealth mark reading unit, and
   the management device includes the storage unit and the data processing unit.
<12b> The optical component management system recited in <11b> in which
   the terminal device further includes a sales customer information input unit to input sales customer information, and
   the data processing unit of the management device stores sales customer information in the storage unit in a manner correlated to the identification information.
<13b> The optical component management system recited in <11b> or <12b> in which
   the management device further includes an expiration date management unit that transmits expiration date information to the terminal device that maintains an optical component having passed a predetermined period from a production date of an optical component stored in the storage unit, and
   the terminal device includes a display unit to display the expiration date information.
<14b> The optical component management system recited in any one of <11b> to <13b>, in which
   the terminal device further includes a reproduction order information input unit that inputs reproduction order information in a manner correlated to identification information of an optical component, and
   the data processing unit of the management device further includes a reproduction information processing unit that selects, from the storage unit, management information including prescription information on the basis of the identification information, and transmits the selected management information to another terminal device.
<15b> An optical component management method, including the steps of:
   reading a stealth mark which is invisible under visible light and visible under light of a predetermined wavelength and includes an impregnated region formed from a fluorescent coloring material and formed on an optical component;
   reading and inputting identification information from the stealth mark that is invisible under the visible light and visible under the light of the predetermined wavelength; and
   receiving the identification information read in the inputting step, and selecting management information corresponding to the stealth mark from the storage unit that stores the management information.
<16b> The optical component management method recited in <15b>, further including the steps of:
   inputting sales customer information; and
   storing the sales customer information in a manner correlated to the identification information.
<17b> The optical component management method recited in <15b> or <16b> further including the steps of:
   transmitting expiration date information to a terminal device that maintains an optical component having passed a predetermined period from a production date of an optical component stored in the storage unit; and
   the terminal device to display the expiration date information.
<18b> The optical component management method recited in any one of <15b> to <17b>, further including the steps of:
   inputting reproduction order information in a manner correlated to the identification information; and
   selecting, from the storage unit, management information including prescription information on the basis of the identification information, and transmitting the selected management information to another terminal device.
<19b> A terminal device included in an optical component management system recited in any one of <11b> to <14b>.
<20b> A management device included in an optical component management system recited in any one of <11b> to <14b>.
<21b> A program causing a terminal device included in an optical component management system recited in any one of <11b> to <14b> to function as a stealth mark input unit that reads and inputs identification information from a stealth mark that is invisible under visible light and visible under light of a predetermined wavelength, and also function as a stealth mark reading unit that reads a stealth mark which is invisible under the visible light and visible under the light of the predetermined wavelength and includes an impregnated region formed from a fluorescent coloring material and formed on an optical component.
<22b> A program causing a management device included in the optical component management system recited in any one of <11b> to <14b> to function as a storage unit that stores management information on an optical component, and also function as a data processing unit that receives identification information from the stealth mark input unit and selects management information corresponding to the stealth mark from the storage unit.
<1c> An optical component production system including:
   a stealth mark input unit that reads and inputs a stealth mark which is attached to an optical component and invisible under visible light and visible under a predetermined wavelength; and
   a processing unit that processes an optical component on the basis of the stealth mark input to the stealth mark input unit,
   in which the stealth mark input unit includes a stealth mark reading unit that reads a stealth mark which is invisible under the visible light and visible under light of the predetermined wavelength and includes an impregnated region formed from a fluorescent coloring material and formed on an optical component.
<2c> The optical component production system recited in <1c>, in which the optical component is a spectacle lens.
<3c> The optical component production system recited in <2c>, in which an optical component before processing is a spectacle lens before lens shaping work.
<4c> The optical component production system recited in <2c> or <3c>, in which the stealth mark is formed near a boxing center of the optical component or inside a frame pattern.
<5c> The optical component production system recited in any one of <1c> to <4c>, in which the stealth mark includes a one-dimensional code or a two-dimensional code.
<6c> The spectacle lens production system recited in any one of <1c> to <5c>, in which the stealth mark includes a character.
<7c> The spectacle lens production system recited in any one of <1c> to <6c>, in which the stealth mark includes a design reference point.
<8c> The optical component production system recited in <1c> to <7c>, further including a management device, in which
   the management device includes:
   a storage unit that stores management information on an optical component; and
   a data processing unit that selects, from the storage unit, management information corresponding to the stealth mark, and
   the processing unit performs processing on the basis of the management information selected by the data processing unit.
<9c> The optical component production system recited in any one of <1c> to <8c>, in which the processing unit performs positioning of an optical component on the basis of a stealth mark input to the stealth mark input unit.
<10c> The optical component production system recited in any one of <1c> to <9c> further including a management device and an inspection device,
   in which
   the management device includes:
   a storage unit that stores management information on an optical component; and
   a data processing unit that selects, from the storage unit, management information corresponding to the image information, and
   the inspection device includes:
      an inspection unit that inspects an optical component after processing; and
      a defect determination unit that determines a defect on an optical component by comparing the management information selected by the data processing unit with inspection information obtained from the inspection unit.
<11c> An optical component production method including the steps of:
   reading a stealth mark which is invisible under visible light and visible under light of a predetermined wavelength and includes an impregnated region formed from a fluorescent coloring material and formed on an optical component;
   reading and inputting a stealth mark which is attached to the optical component and is invisible under the visible light and visible under the predetermined wavelength; and
   processing the optical component on the basis of the stealth mark input to the stealth mark input unit.
<12c> The optical component production method recited in <11c>, further including the steps of:
   selecting management information corresponding to the stealth mark from a storage unit that stores management information on an optical component; and
   performing processing on the basis of the management information.
<13c> The optical component production method recited in any one of <11c> or <12c>, further including the steps of:
   selecting management information corresponding to the stealth mark from the storage unit that stores management information on an optical component;
   inspecting an optical component after processing; and
   determining a defect on an optical component by comparing the selected management information with inspection information obtained from the inspection unit.

Note that the embodiments disclosed herein are examples in all respects and should not be considered to be restrictive. The scope of the present invention is specified not by the above description but by the scope of claims, and it is intended to include meanings equivalent to the scope of claims and all modifications within the scope.

### Reference Signs List

- 1: Spectacle lens management system
- 2: Spectacle lens production system
- 3: Network
- 100: Terminal device
- 101: Stealth mark input unit
- 102: Stealth mark reading unit
- 110: Terminal device
- 111: Stealth mark input unit
- 112: Stealth mark reading unit
- 200: Management device
- 201: Storage unit
- 202: Data processing unit
- 300: Processing device
- 301: Processing unit
- 500: Spectacle lens
- 501: Stealth Mark
- 510: Substrate
- 520: Primer layer
- 530: Hard coating film
- 540: Anti-reflection film

## Claims

1. An optical component comprising a stealth mark that is invisible under visible light and visible under a predetermined wavelength,
wherein the stealth mark comprises an impregnated region formed from a fluorescent coloring material and formed on the optical component.

2. The optical component according to claim 1, wherein the optical component is a spectacle lens.

3. The optical component according to claim 2, further comprising a substrate, a primer layer, a hard coating film, and an anti-reflection film,
wherein the stealth mark is impregnated in any one selected from a group consisting of the substrate, the primer layer, and the hard coating film.

4. The optical component according to claim 3, wherein
the substrate has a convex surface and a concave surface, and
the stealth mark is formed on a convex surface side.

5. The optical component according to claim 3 or 4, wherein
the substrate has a convex surface and a concave surface, and
the stealth mark is formed on a concave surface side.

6. The optical component according to any one of claims 2 to 5, wherein the stealth mark is formed near a boxing center of a spectacle lens or inside a frame pattern.

7. The optical component according to any one of claims 2 to 6, wherein the stealth mark comprises at least one kind selected from a group consisting of a one-dimensional code, a two-dimensional code, a character, a design reference point, and a frame pattern.

8. An optical component management system comprising:
a stealth mark input unit configured to read and input identification information from a stealth mark that is invisible under visible light and visible under a predetermined wavelength;
a storage unit configured to store management information on the optical component; and
a data processing unit configured to receive the identification information from the stealth mark input unit and select, from the storage unit, management information corresponding to the stealth mark,
wherein the stealth mark input unit comprises a stealth mark reading unit configured to read a stealth mark which is invisible under the visible light and visible under light of the predetermined wavelength and comprises an impregnated region formed from a fluorescent coloring material and formed on an optical component.

9. The optical component management system according to claim 8, wherein the optical component is a spectacle lens.

10. The optical component management system according to claim 9, comprising a terminal device and a management device,
wherein the terminal device comprises the stealth mark input unit and the stealth mark reading unit, and
the management device comprises the storage unit and the data processing unit.

11. A terminal device comprised in the optical component management system according to claim 10.

12. A management device comprised in the optical component management system according to claim 10.

13. A program causing a terminal device comprised in the optical component management system according to claim 10 to function as a stealth mark input unit that reads and inputs identification information from a stealth mark that is invisible under visible light and visible under light of a predetermined wavelength, and also function as a stealth mark reading unit that reads a stealth mark which is invisible under the visible light and visible under the light of the predetermined wavelength and comprises an impregnated region formed from a fluorescent coloring material and formed on an optical component.

14. A program causing a management device comprised in the optical component management system according to claim 10 to function as a storage unit that stores management information on an optical component, and also function as a data processing unit that receives identification information from the stealth mark input unit and selects management information corresponding to the stealth mark from the storage unit.

15. An optical component production system comprising:
a stealth mark input unit configured to read and input a stealth mark which is attached to an optical component, and invisible under visible light and visible under a predetermined wavelength; and
a processing unit configured to process the optical component on the basis of the stealth mark input to the stealth mark input unit,
wherein the stealth mark input unit comprises a stealth mark reading unit configured to read a stealth mark which is invisible under the visible light and visible under light of the predetermined wavelength and comprises an impregnated region formed from a fluorescent coloring material and formed on an optical component.
